# EUROPÄISCHE PATENTSCHRIFT

(11) **EP 2 176 558 B1**
(45) Veröffentlichungstag und Bekanntmachung des Hinweises auf die Patenterteilung: **19.03.2014**
(21) Anmeldenummer: 08785562.3
(22) Anmeldetag: 14.08.2008
(51) Int. Cl.: F16B 25/00, F16B 33/00, F16B 33/06

(54) **SCHRAUBANKER FÜR BEFESTIGUNGEN IN BETON UND MAUERWERK**
SCREW ANCHOR FOR FASTENING DEVICES IN CONCRETE OR MASONRY
ANCRAGE À BOULON POUR FIXATIONS DANS LE BÉTON ET EN MAÇONNERIE

(30) Priorität: 17.08.2007 DE 102007038976
(43) Veröffentlichungstag der Anmeldung: 21.04.2010
(73) Patentinhaber: Ludwig Hettich & Co. KG, 78713 Schramberg (DE)
(72) Erfinder: HETTICH, Ulrich, 78713 Schramberg (DE)
(74) Vertreter: Liesegang, Eva
(86) Internationale Anmeldenummer: PCT/EP2008/006715
(87) Internationale Veröffentlichungsnummer: WO 2009/024295

(56) Entgegenhaltungen:
- EP-A- 0 356 019
- DE-A1- 10 243 537
- DE-A1-102006 058 668
- DE-C1- 19 854 591
- NL-C2- 1 017 158
- US-A- 3 078 334
- US-A- 4 887 951
- US-A- 5 338 141
- US-B1- 7 070 376

## Beschreibung

Die Erfindung betrifft eine Kombination aus einem Schraubanker und einem vorgebohrten Loch in Beton und Mauerwerk und Anwendung dieser Kombination, in korrodierender Umgebung, z.B. in Außenbereichen, die Klimaeinwirkungen ungeschützt ausgesetzt sind, wobei der Schraubanker einen teilweise mit Gewinde versehenen Schaft aufweist.

Die Verwendung von Schraubankem im Bauwesen ist durch nationale und internationale Vorschriften geregelt. So ist für Schraubanker, die zum Einsatz in korrodierender Atmosphäre, z.B. in Außenbereichen, bestimmt sind, die Verwendung von korrosionsbeständigen Stählen vorgeschrieben. Nachteilig ist dabei die aufwendige Herstellung wie auch der teure Werkstoff.

Aus NL 1 017 158 C2 ist ein Schraubanker für Befestigungen von Abdeckplatten mit Dämmstoffen mit einem teilweise mit Gewinde versehenen Schaft bekannt, der mindestens im Bereich seines Montageendes von einem korrosionsbeständigen Überzug eingefasst ist., wobei der Schaft montageseitig einen Schaftabschnitt aufweist, der von dem Überzug abdichtend umgeben ist, und wobei ein Dichtring auf den Überzug aufgeschoben ist.

US 4 887 951 A, offenbart einen Schraubanker mit Schaft für die Befestigung eines Werkstückes an einem Gegenstück (objective member). Das Gegenstück hat ein vorgebohrtes Loch, in welchem ein schraubspitzenseitiges Gewinde des Schaftes gewindeschneidend eindrehbar ist. Montageseitig hat der Schaft einen Schaftabschnitt, der mindestens im Bereich seines Montageendes von einem korrosionsbeständigen Überzug eingefasst ist. Anschließend an diesen Überzug ist ein Dichtring auf den Schaftabschnitt aufgeschoben.

DE 102 43 537 offenbart die Kombination aus einem Schraubanker und einem vorgebohrten Loch in Beton gemäß dem Oberbegriff des Anspruchs 1 und eine Anwendung gemäß dem Oberbegriff des Anspruchs 7.

Der Erfindung liegt die Aufgabe zugrunde, eine Kombination aus einem Schraubanker und einem vorgebohrten Loch gemäss Oberbegriff des Anspruchs 1 und eine Anwendung gemäss Oberbegriff des Anspruchs 7 zu schaffen, die kostengünstiger ist als die bekannten Schraubanker aus korrosionsbeständigem Stahl.

Diese Aufgabe ist durch Patentansprüche 1 und 7 gelöst.

Bei einer Kombination und einer Anwendung gemäß der Erfindung sorgen der Überzug und der zwischen der Wand und dem Grund der Ansenkung sowie dem Schaft eingequetschte Dichtring dafür, dass Feuchtigkeit oder sonstige korrodierende Fremdpartikel (Staub) nicht bis zu den Gewindeflanken des Gewindes des Schraubankers vordringen können, so dass das Gewinde vor üblichen Korrosionserscheinungen, wie Rost geschützt ist.. Dies führt zu einer besonders wirksamen Abschirmung der Außenatmosphäre von dem innen tiefer im Bohrloch gelegenen überzugsfreien Gewindeabschnitt. Für den Schraubanker kann deshalb ein korrodierbarer härtbarer Kohlenstoffstahl anstatt teuren rostfreien Endelstahles eingesetzt werden.

Die Kombination und die Anwendung der Erfindung eignen sich insbesondere zum Einsatz bei ungerissenem Beton, bei dem man davon ausgehen kann, dass die Betonmatrix um den Schraubanker vollständig geschlossen ist. Hier bietet der Beton selbst ausreichenden Korrosionsschutz unter der Voraussetzung ausreichender Betondeckung, so dass ein Korrosionsangriff nur über das Bohrloch möglich ist.

Ist ein Einsatz in Risse enthaltendem Beton beabsichtigt, kann ein Korrosionsangriff auch über das Betoninnere erfolgen. In diesem Fall ist eine durch die Patentansprüche nicht erfasste Ausführung bevorzugt, bei welcher auch der lastaufnehmende Gewindeabschnitt des Schraubankers den korrosionsbeständigen Überzug erhält. In diesem Fall ist gleichwohl bevorzugt, dass der zum Furchen eines Gewindes dienende Schraubspitzenbereich des Gewindeabschnittes, der praktisch keinen Beitrag zur Lastaufnahme des verbleibenden Gewindeteiles leistet, von dem Überzug freigehalten ist, weil das Gewindefurchen in Beton einen zu aufwendigen Überzug erfordern würde.

Der Überzug nach dieser zweiten Ausführung kann entweder mechanisch durch Formschluß auf dem Schraubanker gehalten sein, wozu erforderlich ist, dass ein Gewinde in den stählernen Schaftkörper geschnitten ist, welches das entsprechende Gewinde auf dem vorgeformten Überzug formschlüssig abstützt, oder dass der Schaftkörper im Gewindebereich glatt ist und mit der hohlzylindrischen Innenwand des Überzugs, welcher das lastübertragende Gewinde auf seiner Außenseite vorgeformt hat, dauerhaft verklebt ist.

Für den Überzug bevorzugte Kunststoffe sind die Polyamide PA 6 oder PA 66 oder Polyethylen (PE). Die Überzüge aus solchen oder anderen korrosionsbeständigen Kunststoffen hoher Dauerhaltbarkeit werden vorteilhafterweise als Hülsen vorgefertigt und zur Endmontage auf den Grundkörper aufgeschoben, aufgeschweißt oder aufgeklipst. Ein prinzipiell auch mögliches Umspritzen des Grundkörpers hat den Nachteil, dass der sich nach dem Erkalten zusammenziehende Kunststoff große Eigenspannungen erzeugt.

Die Erfindung ist im folgenden anhand schematischer Zeichnungen mit weiteren Einzelheiten näher erläutert. Es zeigen:
Fig. 1 einen Längsschnitt durch einen in ungerissenem Beton montierten Schraubanker gemäß einer Ausführung der Erfindung;
Fig. 2 einen Längsschnitt wie Fig. 1, in welchem der Schraubanker erst teilweise in den Beton eingedreht ist;
Fig. 3 einen Längsschnitt wie Fig. 2, bei dem der Schraubanker wie in Fig. 1 in endmontierter Stellung im Bohrloch dargestellt ist;
Fig. 4 eine Einzelheit bei IV in Fig. 2; und
Fig. 5 eine Einzelheit bei V in Fig. 3;
Fig. 6 eine Stirnansicht eines Schraubankers gemäß einer Ausführung , welche durch die Patentansprüche nicht erfasst ist;
Fig. 7 einen Längsschnitt nach der Linie VII-VII in Fig. 6;
Fig. 8 eine Einzelheit bei VIII in Fig. 7;
Fig. 9 eine Stirnansicht eines Schraubankers in einer Ausführung, welche durch die Patentansprüche nicht erfasst ist;
Fig. 10 einen Längsschnitt nach der Linie X-X in Fig. 9.

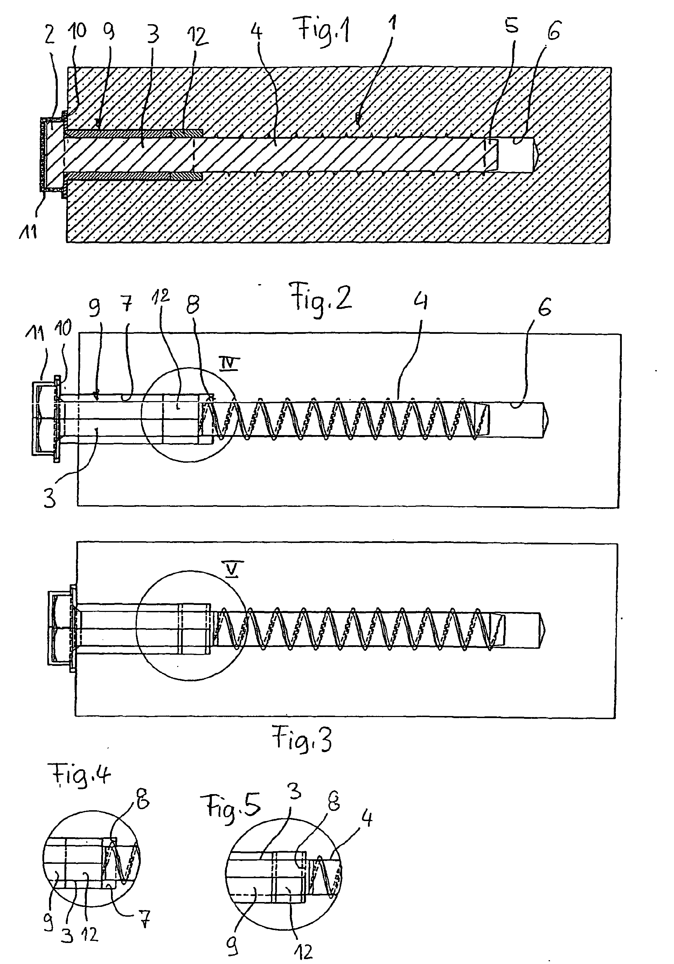

Der Schraubanker gemäß den Fig. 1 bis 5 ist für den Einsatz in ungerissenem Beton von besonderem Vorteil . Hierbei ist davon auszugehen, dass ein Korrosionsangriff nur über ein in dem ungerissenen Beton vorgebohrtes Loch 6 von außen her, d.h. von der Montageseite links in Fig. 1, geschehen kann. Der Schraubanker gemäß Fig. 1 hat einen Grundkörper 1 aus einem härtbaren Kohlenstoffstahl mit einem Sechskantkopf 2, einem glatten Schaftabschnitt 3 und einem Gewindeabschnitt 4 sowie einem leicht konischen Einschraubabschnitt 5.

Das Loch 6, in welches der Schraubanker unter Furchung des Gewindes einzuschrauben ist, ist durch eine Ansenkung 7 größeren Durchmessers abgestuft, deren Grund mit 8 bezeichnet ist.

Im Bereich dieser Ansenkung ist der glatte Schaftabschnitt 3 mit einem aus Kunststoff vorgefertigten Überzug in Form einer Hülse 9 versehen, die an dem montageseitigen Ende mit einem Kragen 10 versehen ist. Über diesen Kragen 10 stützt sich die Hülse 9 am äußeren Rand der Bohrung 6 in fertig montiertem Zustand ab (Fig. 1 und Fig. 3). Mit dem Kragen 10 ist eine Kappe 11 dicht verbunden, z.B. durch Verkleben, die aus dem gleichen korrosionsbeständigen und dauerhaltbaren Kunststoff wie die Hülse 9 bestehen kann, z. B. aus PA 6, PA 66 oder aus PE.

Axial innerhalb der Hülse 9 ist auf dem glatten Schaftabschnitt 3 ein Dichtring 12 aus einem gummielastischen Elastomermaterial aufgeschoben.

Wie insbesondere die Einzeldarstellungen gemäß Fig. 4 bei noch nicht vollständig eingeschraubtem Schraubanker und in Fig. 5 bei endmontiertem Schraubanker zeigen, ist der Dichtring 12 durch vollständiges Einschrauben des Schraubankers gegen den Grund 8 der Ansenkung 7 und auch gegen die Umfangswand der Ansenkung gequetscht, so dass er in endmontiertem Zustand des Schraubankers gestaucht ist, d.h. eine kleinere axiale Abmessung in Fig. 3 oder 5 als in Fig. 2 oder 4 hat. Somit ist durch die dichte Verpressung zwischen der Hülse 9 und dem Dichtring 12 mit dem Grund 8 und der Seitenwand der Ansenkung absolute Dichtheit gewährleistet, die ein Vordringen von Feuchtigkeit oder Fremdpartikeln in den Gewindeabschnitt 4 verhindert und somit den Gewindeabschnitt 4 vor einem äußeren Korrosionsangriff zuverlässig und dauerhaft schützt.

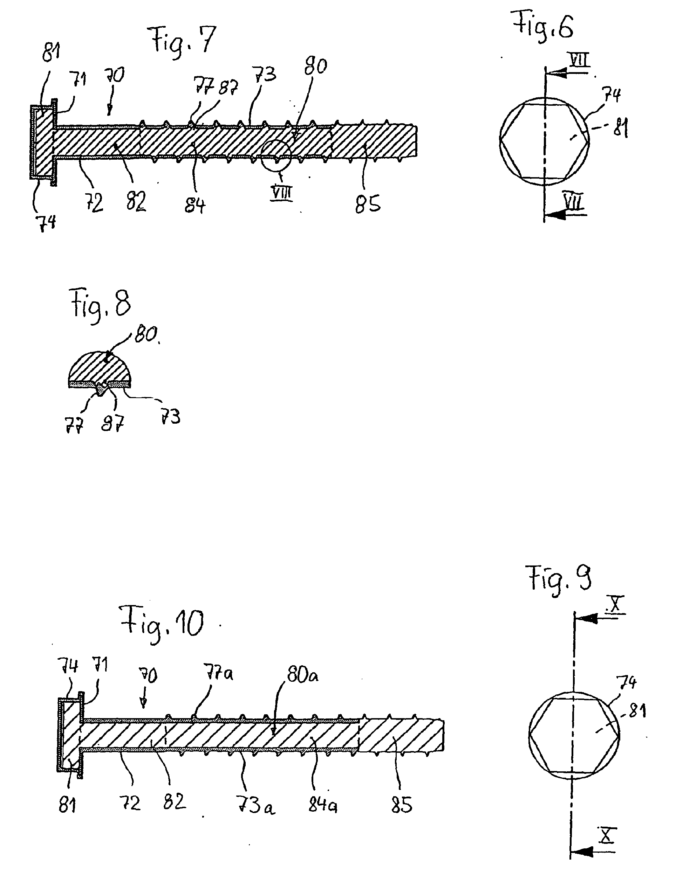

Bei den Ausführungen nach den Fig. 6 bis 8 und 9, 10 besteht der Grundkörper 80 des Schraubankers ebenfalls aus einem härtbaren Kohlenstoffstahl, der nicht korrosionsresistent ist. Beide Ausführungen sind jedoch für den Einsatz in gerissenem bzw. rissempfindlichen Beton vorgesehen. Hierzu ist erforderlich, dass auch ein das lastübertragende Gewinde 87 aufweisender Schaftgewindeabschnitt 84 geschützt wird, z.B. durch einen korrosionsbeständigen Überzug 70. Dieser Überzug 70 hat einen Kragen 71, einen glatten Hülsenabschnitt 72 und daran anschließend einen Hülsengewindeabschnitt 73, der sich bis an einen überzugsfreien Gewindefurchabschnitt 85 erstreckt, welcher praktisch ausschließlich dem Furchen des Gewindes in dem in Beton vorgebohrten Loch 6 (Fig. 1 bis 5) dient und zur Lastaufnahme praktisch keinen Beitrag leistet.

In den Schaftgewindeabschnitt 84 ist ein Gewinde 87 eingeschnitten, das ausschließlich dem Zweck dient, ein auf dem Hülsengewindeabschnitt 73 geformtes, lastaufnehmendes Gewinde 77 formschlüssig zu halten, so dass der Überzug 70 nicht gewaltfrei von dem Grundkörper 80 des Schraubankers gelöst werden kann.

Ein Dichtring entsprechend dem Dichtring 12 kann hier entfallen, aber auch zur ergänzenden Verbesserung des Korrosionsschutzes nützlich sein.

Bei der Ausführung nach den Fig. 9 und 10 sind für gleiche oder funktionsgleiche Teile wie in den Fig. 6 bis 8 gleiche Bezugszahlen verwendet. Unterschiedliche Teile sind ergänzend mit dem Buchstaben a hervorgehoben.

Die Ausführung nach den Fig. 9 und 10 unterscheidet sich von derjenigen nach den Fig. 6 bis 8 im wesentlichen dadurch, dass der mit einem lastaufnehmenden Hülsengewinde 77a ausgerüstete Hülsen-Gewindeabschnitt 73a durch eine Verklebung mit dem glatt oder aufgerauht ausgebildeten Schaftabschnitt 84a kraftschlüssig verbunden ist, der hier gewindefrei ist. Die Klebeverbindung muss so beschaffen sein, dass sie zur Übertragung der Zug-, Druck- und Biegebeanspruchung des Schraubankers im Betrieb von dem Hülsengewindeabschnitt 77a auf den Schaftabschnitt 84a fähig ist, ohne dass die Gefahr einer Ablösung besteht.

Anders als bei der Ausführung nach den Fig. 1 bis 6 erstreckt sich also bei den beiden Ausführungen nach den Fig. 6 bis 10 der gegen Korrosion abdichtende Überzug 70 sowohl über den glatten Hülsenabschnitt 72 als auch über den Hülsen-Gewindeabschnitt 73, so dass auch ein Korrosionsangriff aus rissigem Beton über diese Schaftlänge nicht möglich ist. Insbesondere ist dadurch der lastaufnehmende Gewindeabschnitt 84 oder 84a des Schaftes 80 gegen einen Korrosionsangriff zuverlässig geschützt. Eine mögliche Korrosion des Gewindefurchabschnittes 85 des Schraubankers schadet deshalb nicht, weil dieser Gewindefurchabschnitt die Belastbarkeit des Schraubankers praktisch nicht beeinflusst.

Die korrosionsschützende Wirkung der Ausführung nach den Fig. 9 und 10 ist gleich wie diejenige der Ausführung nach den Fig. 6 bis 8.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Kombination aus einem Schraubanker und einem vorgebohrten Loch (6) in Beton oder Mauerwerk, wobei der Schraubanker einen zumindest teilweise mit Gewinde versehenen Schaft (1) hat und mindestens im Bereich seines Montageendes von einem korrosionsbeständigen Überzug (9) eingefasst ist, der Schaft (1) montageseitig einen Schaftabschnitt (3) aufweist, der von dem Überzug (9) abdichtend umgeben ist, und ein an den Schaftabschnitt 3) anschließender, schraubspitzenseitiger Gewindeabschnitt (4) überzugsfrei ist, **dadurch gekennzeichnet, dass** in Richtung der Schraubenspitze anschließend an den Überzug (9) ein Dichtring (12) auf den Schaftabschnitt (3) aufgeschoben ist, dass das vorgebohrte Loch (6) eine Ansenkung (7) aufweist, welche der Schaft (1) durchsetzt, und dass der Dichtring (12) in montiertem Zustand des Schraubankers gegen den Grund (8) und gegen die Umfangswand der Ansenkung (7) gequetscht ist.

2. Kombination nach Anspruch 1, **dadurch gekennzeichnet, dass** der Schraubanker montageseitig einen Kopf (2) aufweist, der ebenfalls von dem Überzug (9) eingefasst ist.

3. Kombination nach Anspruch 1 oder 2, **dadurch gekennzeichnet, dass** der Außendurchmesser des Schaftabschnittes (3) mit Überzug (9) und Dichtring (12) größer als der Außendurchmesser des Gewindeabschnittes (4) ist.

4. Kombination nach einem der Ansprüche 1 bis 3, **dadurch gekennzeichnet, dass** der Schaft (1) aus einem korrodierbaren härtbaren Kohlenstoffstahl besteht.

5. Kombination nach einem der Ansprüche 1 bis 4, **dadurch gekennzeichnet, dass** der Überzug (9) aus einem korrosionsbeständigen Kunststoff hoher Dauerhaltbarkeit geformt ist.

6. Kombination nach einem der Ansprüche 1 bis 5, **dadurch gekennzeichnet, dass** der Überzug (9) aus einer vorgefertigten Hülse besteht.

7. Anwendung eines Schraubankers in einem vorgebohrten Loch (6) in Beton oder Mauerwerk, wobei der Schraubanker einen zumindest teilweise mit Gewinde versehenen Schaft (1) hat, und mindestens im Bereich seines Montageendes von einem korrosionsbeständigen Überzug (9) eingefasst ist, der Schaft montageseitig einen Schaftabschnitt (3) aufweist, der von dem Überzug (9) abdichtend umgeben ist, und ein an den Schaftabschnitt (3) anschließender, schraubspitzenseitiger Gewindeabschnitt (4) überzugsfrei ist, **dadurch gekennzeichnet, dass** in Richtung der Schraubenspitze anschließend an den Überzug (9) ein Dichtring (12) auf den Schaftabschnitt (3) aufgeschoben ist, dass das vorgebohrte Loch (6) eine Ansenkung (7) aufweist, welche der Schaft (1) durchsetzt, und dass der Dichtring (12) in montiertem Zustand des Schraubankers gegen den Grund (8) und gegen die Umfangswand der Ansenkung (7) gequetscht ist.

8. Anwendung nach Anspruch 7, **dadurch gekennzeichnet, dass** in endmontiertem Zustand des Schraubankers durch dichte Verpressung zwischen dem Überzug (9) und dem Dichtring (12) sowie dem Grund (8) und der Umfangswand der Ansenkung (7) absolute Dichtheit gegen ein Vordringen von Feuchtigkeit oder Fremdpartikeln erreicht ist.

## Claims

1. Combination of a screw anchor and a hole (6) predrilled in concrete or masonry, wherein the screw anchor has an at least partly threaded shaft (1) and is enclosed at least in the region of its mounting end by a corrosion resistant coating (9), the shaft (1) comprises at the mounting side a shaft section (3) which is sealingly covered by the coating (9), and a thread section (4) at the screw tip side joining the shaft section (3) is free of coating, **characterized in that** a sealing ring (12) is pushed upon the shaft section (3) adjacent to the coating (9), that the predrilled hole (6) comprises a counterbore (7) through which the shaft (1) extends, and that in mounted state of the screw anchor the sealing ring (12) is squeezed against the bottom (8) and the circumferential wall of the counterbore (7).

2. Combination according to claim 1, **characterized in that** the screw anchor comprises a head (2) at the mounting side, which also is enclosed by the coating (9).

3. Combination according to claim 1 or 2, **characterized in that** the outer diameter of the shaft section (3) with the coating (9) and the sealing ring (12) is greater than the outer diameter of the thread section (4).

4. Combination according to one of claims 1 to 3, **characterized in that** the shaft (1) consists of a carbonized steel which can corrode and can be hardened.

5. Combination according to one of claims 1 to 4, **characterized in that** the coating (9) is formed from a corrosion resistant plastic of high durability.

6. Combination according to one of claims 1 to 5, **characterized in that** the coating (9) consists of a prefabricated sleeve.

7. Use of a screw anchor in a whole (6) predrilled in concrete or masonry, wherein the screw anchor has an at least partly threaded shaft (1) and is enclosed at least in the region of its mounting end by a corrosion resistant coating (9), the shaft (1) comprises at the mounting side a shaft section (3) which is sealingly covered by the coating (9), and a thread section (4) at the screw tip side joining the shaft section (3) is free of coating, **characterized in that** a sealing ring (12) is pushed upon the shaft section (3) adjacent to the coating (9), that the predrilled hole (6) comprises a counterbore (7) through which the shaft (1) extends, and that in mounted state of the screw anchor the sealing ring (12) is squeezed against the bottom (8) and the circumferential wall of the counterbore (7).

8. Use according to claim 7, **characterized in that** in the final mounting state of the screw anchor absolute sealing against intrusion of humidity or foreign particles is achieved by sealing pressure caused between the coating (9) and the sealing ring (12) and as well the bottom (8) and the circumferential wall of the counterbore (7).

## Revendications

1. Combinaison d'un ancrage à boulon et d'un trou (6) pré-foré dans le béton ou la maçonnerie, l'ancrage à boulon ayant une tige (1) au moins partiellement dotée d'un filet et étant enveloppé, au moins dans la zone de son extrémité de montage, par un revêtement (9) résistant à la corrosion, la tige (1) présentant côté montage un tronçon de tige (3) qui est entouré de façon étanche par le revêtement (9), et un tronçon de filet (4) côté pointe de vissage, se raccordant au tronçon de tige (3), étant dépourvu de revêtement, **caractérisée en ce que**, en direction de la pointe de vis, une bague d'étanchéité (12) se raccordant au revêtement (9) est poussée sur le tronçon de tige (3), **en ce que** le trou (6) pré-foré présente un chanfrein (7) traversé par la tige (1), et **en ce que** la bague d'étanchéité (12), dans l'état monté de l'ancrage à boulon, est écrasée contre le fond (8) et contre la paroi périphérique du chanfrein (7).

2. Combinaison selon la revendication 1, **caractérisée en ce que** l'ancrage à boulon présente côté montage une tête (2) qui est également enveloppée par le revêtement (9).

3. Combinaison selon la revendication 1 ou 2, **caractérisée en ce que** le diamètre extérieur du tronçon de tige (3) avec le revêtement (9) et la bague d'étanchéité (12) est plus grand que le diamètre extérieur du tronçon de filet (4).

4. Combinaison selon une des revendications 1 à 3, **caractérisée en ce que** la tige (1) est réalisée en acier au carbone durcissable et corrodable.

5. Combinaison selon une des revendications 1 à 4, **caractérisée en ce que** le revêtement (9) est formé d'une matière plastique résistante à la corrosion et présentant une grande durabilité.

6. Combinaison selon une des revendications 1 à 5, **caractérisée en ce que** le revêtement (9) est constitué d'un manchon préfabriqué.

7. Utilisation d'un ancrage à boulon dans un trou (6) pré-foré dans le béton ou la maçonnerie, l'ancrage à boulon ayant une tige (1) au moins partiellement dotée d'un filet et étant enveloppé, au moins dans la zone de son extrémité de montage, par un revêtement (9) résistant à la corrosion, la tige présentant côté montage un tronçon de tige (3) qui est entouré de façon étanche par le revêtement (9), et un tronçon de filet (4) côté pointe de vissage, se raccordant au tronçon de tige (3), étant dépourvu de revêtement, **caractérisée en ce que**, en direction de la pointe de vis, une bague d'étanchéité (12) se raccordant au revêtement (9) est poussée sur le tronçon de tige (3), **en ce que** le trou (6) pré-foré présente un chanfrein (7) traversé par la tige (1), et **en ce que** la bague d'étanchéité (12), dans l'état monté de l'ancrage à boulon, est écrasée contre le fond (8) et contre la paroi périphérique du chanfrein (7).

8. Utilisation selon la revendication 7, **caractérisée en ce que**, dans l'état de montage final de l'ancrage à boulon, grâce à la compression étanche exercée entre le revêtement (9) et la bague d'étanchéité (12) ainsi
le fond (8) et la paroi périphérique du chanfrein (7), on obtient une étanchéité absolue contre une intrusion d'humidité ou de corps étrangers.
